# EUROPEAN PATENT SPECIFICATION

(11) **EP 1 974 529 B1**
(45) Date of publication and mention of the grant of the patent: **19.09.2012**
(21) Application number: 06841354.1
(22) Date of filing: 13.12.2006
(51) Int. Cl.: H04L 29/08, G06F 11/30

(54) **METHOD AND APPARATUS FOR COLLECTING DATA FOR CHARACTERIZING HTTP SESSION WORKLOADS**
VERFAHREN UND VORRICHTUNG ZUM SAMMELN VON DATEN ZUR CHARAKTERISIERUNG VON HTTP-SITZUNGS-ARBEITSLASTEN
PROCEDE ET APPAREIL POUR COLLECTER DES DONNEES AFIN DE CARACTERISER DES CHARGES DE SESSIONS HTTP

(30) Priority: 22.12.2005 US 316285
(43) Date of publication of application: 01.10.2008
(73) Proprietor: International Business Machines Corporation, Armonk, NY 10504 (US)
(72) Inventor: BARSNESS, Eric Lawrence, Pine Island, Minnesota 55963 (US); SANTOSUOSSO, John Matthew, Rochester, Minnesota 55901 (US); STECHER, John Joseph, Rochester, Minnesota 55901 (US)
(74) Representative: Pyecroft, Justine Nicola C.
(86) International application number: PCT/EP2006/069678
(87) International publication number: WO 2007/071607

(56) References cited:
- EP-A- 1 494 421
- US-A1- 2002 042 823
- US-A1- 2002 073 211
- BRIAN GOETZ: "Java theory and practice: State replication in the Web tier" IBM DEVELOPERWORKS, [Online] 29 June 2004 (2004-06-29), pages 1-4, XP002425580 Retrieved from the Internet: URL:http://www-128.ibm.com/developerworks/ java/library/j-jtp07294.html> [retrieved on 2007-03-20]

## Description

### FIELD OF THE INVENTION

The present invention relates generally to digital data processing, and more particularly to the operation of servers which respond to client requests using HTTP sessions in a networked digital computing environment.

### BACKGROUND

In the latter half of the twentieth century, there began a phenomenon known as the information revolution. While the information revolution is a historical development broader in scope than any one event or machine, no single device has come to represent the information revolution more than the digital electronic computer. The development of computer systems has surely been a revolution. Each year, computer systems grow faster, store more data, and provide more applications to their users. At the same time, the cost of computing resources has consistently declined, so that information which was too expensive to gather, store and process a few years ago, is now economically feasible to manipulate via computer. The reduced cost of information processing drives increasing productivity in a snowballing effect, because product designs, manufacturing processes, resource scheduling, administrative chores, and many other factors, are made more efficient.

The reduced cost of computing and the general availability of digital devices has brought an explosion in the volume of information stored in such devices. With so much information stored in digital form, it is naturally desirable to obtain wide access to the information from computer systems. The volume of information dwarfs the storage capability of any one device. To improve information access, various techniques for allowing computing devices to communicate and exchange information with one another have been developed. Perhaps the most outstanding example of this distributed computing is the World Wide Web (often known simply as the 'web'), a collection of resources which are made available throughout the world using the Internet. People from schoolchildren to the elderly are learning to use the web, and finding an almost endless variety of information from the convenience of their homes or places of work. Businesses, government, organizations and even ordinary individuals are making information available on the web, to the degree that it is now the expectation that anything worth knowing about is available somewhere on the web.

The Internet, which provides the support for the web as well as for e-mail and other forms of communication and distributed processing among multiple digital systems, is a heterogeneous network of digital devices (nodes) connected by multiple links, so that between any two nodes of the network there are typically multiple paths, giving the Internet some degree of redundancy. Data is sent in packets, each packet being routed across multiple successive nodes until it reaches its destination.

At the basic level of routing packets, the Internet is capable of transferring any arbitrary data from one node to another, and may thus be viewed as a communications medium. However, the usefulness of the Internet depends on the applications which handle data exchanges at the source and destination nodes. The advent of web browsers and other web applications has thus greatly expanded the use of the Internet, by making the basic information transfer technology available for use on an individual, interactive basis to people without extensive computer programming skills.

It should therefore be recognized that enhancements to the usability of Internet technology have been critical to the Internet's widespread acceptance, and that we may expect this to be true of continued use and expansion of the Internet and related technologies for solving problems in the future.

The World Wide Web employs an interactive client-server paradigm. In response to user input, an interactive browser application executing on a client establishes a connection, referred to as a Hyper-Text Transfer Protocol (HTTP) session, with a server application by accessing a web page (such as a home page) maintained by the server. The server responds in real time, and the browser formats the response for display to the user. At the most basic level of interaction, the HTTP session may consist of nothing more than the client requesting a document (such as a web page) by sending a URL of the desired document, and the server responding by sending a copy of the requested document. In many cases, an HTTP session involves a significantly more complex data interchange. For example, a user may access an on-line retailer, browse various items (different web pages) of the retailer's on-line catalogue, provide search parameters for finding items of interest, select specific items to purchase, provide billing and shipping information, and so forth, all within the context of a single HTTP session.

In order to support the complex interactive exchange of data within an HTTP session, it is generally desirable for the server to maintain some session-persistent data, i.e., data which is used to maintain session state and persists in the server for length of the session. This session-persistent data remains in the server throughout the interactive interchange between client and server as data packets are exchanged and the client navigates from one web page to another within the server's environment. Generally, the session-persistent data is not repeated in each of the data packets transmitted between the client and server, although it may be updated by input received from the client or data generated internally by the server. This session-persistent data is typically maintained in the server in a session data object, such as a JAVA^{™} Bean.

In a server which serves clients via the web, multiple clients may be connected to the server at any one time, i.e., there may be multiple HTTP sessions active in the server at any one time. In a typical large enterprise, the number of simultaneous active sessions which must be supported is well in excess of the capabilities of any single computer system. Additionally, in many large enterprises there is a critical need for the server to be available at all times. Many such enterprises therefore provide web services using multiple server computer systems, also referred to as a cluster of servers. Such a cluster provides the additional processing power of multiple systems, and, properly configured, can provide a desired degree of redundancy to prevent denial of service to clients in the event of failure or other unavailability of one or more of the individual server systems within the cluster. In order to provide a seamless client interface in the event of failure of one of the server systems, session-persistent data can be maintained in a redundant fashion. A common technique for maintaining redundant session-persistent data is to provide one or more systems within the cluster which maintain a database of session-persistent data on behalf of other systems of the cluster which perform server functions for the clients. If any of the server systems fails, its active sessions can be allocated to one or more other server systems of the cluster, and the corresponding session-persistent data provided to the appropriate server or servers.

The volume and type of data maintained as session-persistent data depends on the applications being performed by the server. Some applications maintain a minimal amount of state data which does not vary significantly from session to session, but many applications maintain session data which is far more complex, and which represents a history of the client's interaction with the server during the session. In such applications, session-persistent data tends to accumulate as sessions become longer and the client engages in more interaction with the server. Maintenance of such session-persistent data may consume a very substantial portion of the hardware resources available in a cluster of servers.

In a typical complex web server environment, the functions being performed by the server on behalf of clients are constantly evolving. For example, in an on-line retailing environment, the web pages displayed to the user are constantly being updated to reflect new items, discontinued items, special offerings, and so forth. From time to time, the enterprise may replace its entire web interface with an improved version, providing improved function, graphics, navigation, and so forth. Additionally, the set of clients (customers) who access the server (on-line retailer) may evolve, or may develop different patterns of interaction with the server.

Due to the fluidity and complexity of this client-server interaction, it is difficult to predict usage patterns within the server, and in particular, it is difficult to predict the volume of session-persistent data that must be maintained and the resources necessary to maintain it. Without adequate means to predict these usage patterns, it is difficult to assure that adequate resources will be available for servicing client requests, for maintaining redundancy, and for assuring server availability. Furthermore, it is difficult to allocate the resources that are available in an optimum fashion, so that even if sufficient resources are available, desired functionality might be lacking.

A need therefore exists for improved techniques for characterizing and understanding the client-server interactions within HTTP sessions of a web server.

US 2002 073211 discloses a system and method for facilitating secure communication between a web browser and an application server. An application server is able to actively send out requests to webservers to connect approved browsers for service sessions between the browsers and application servers. The invention further includes a state server configured to store data related to communication sessions occurring among a web browser, a webserver and an application server, to allow one webserver to take over a session from another webserver in the event of a termination of a session monitored by a webserver to take over a session from another webserver in the event of a termination of a session monitored by a webserver.

EP 1 494 421 discloses one or more processor-accessible media including processor-executable instructions that, when executed, direct a system to perform actions that include: accumulating host status information at multiple hosts; and sending the accumulated host status information from the multiple hosts.

### SUMMARY OF THE INVENTION

The present invention relates to a method according to independent claim 1, a computer program product according to independent claim 10, and an apparatus according to independent claim 14. Additional aspects are set out in the accompanying dependent claims.

A web server comprising multiple computer systems includes at least one system which maintains a repository (e.g. a database, and referred to as a database hereafter for ease of reference) of redundant session-persistent data on behalf of other systems which process HTTP session workloads for clients. A session analyzer extracts information from this database to characterize HTTP session workloads.

In the preferred embodiment, HTTP sessions are allocated to multiple server systems of a cluster, each server system processing a respective subset of the active HTTP sessions. An application server and one or more applications supported by the application server execute on each server system of the cluster to process the active HTTP sessions. The application server maintains session-persistent data in the form of HTTP session data objects, which are preferably JAVA^{™} beans, although they could take some other form. The cluster further includes at least one session redundancy system which maintains a database of redundant session-persistent data. In the event of failure or other unavailability of any of the server systems, session-persistent data corresponding to active sessions on the failed server system can be recovered from the redundant session-persistent data. The application server includes a facility for automatically updating redundant session-persistent data in the session redundancy system as changes are made to the session-persistent data within the application server and responses are transmitted to the client. This configuration and division of function described as a preferred embodiment could vary.

In the preferred embodiment, the session analyzer performs both a data mining and an intelligent inferencing function. The data mining function extracts data from the database of redundant session-persistent data to characterize the session workloads. This data can be presented to a user, such as a system administrator, in any of various forms. As an optional refinement, the analyzer includes an intelligent inferencing function which can draw inferences from the extracted data using a rules-based system. Preferably, these inferences relate to the adjustment of tuning parameters available to a system administrator or similar person, although other inferences might alternatively be drawn.

By providing an easy-to-use tool for characterizing HTTP session workloads, proper resource planning and tuning in a complex web server is facilitated. The data obtained from characterizing HTTP session workloads can also be useful in identifying those characteristics of web server application programs which result in excessive resource consumption, for possible corrective action in designing future versions of the application programs themselves. Furthermore, since the database of redundant session-persistent data is already being maintained for the purpose of assuring session data redundancy and server availability to clients, the extraction of HTTP session workload data from this existing database involves comparatively little additional system overhead.

Further details of the present invention, both as to its structure and operation, can best be understood by referring to the following detailed description and accompanying drawings.

### BRIEF DESCRIPTION OF THE DRAWINGS

Embodiments of the invention are described below in more detail, by way of example, with reference to the accompanying drawings in which common reference numerals indicate similar parts and in which:
Fig. 1 is a high-level representation of the Internet.
Fig. 2 is a high-level representation of a typical web server environment for characterizing HTTP session workloads, according to the preferred embodiment of the present invention.
Fig. 3 is a high-level block diagram of the major hardware components of a computer system of a web server, according to the preferred embodiment.
Fig 4 is a conceptual illustration of the major software components of a session server computer system, according to the preferred embodiment.
Fig. 5 is a conceptual illustration of the major software components of session redundancy database system, according to the preferred embodiment.
Fig. 6 is a flow diagram illustrating at a high level the process of servicing client requests and maintaining session state data, according to the preferred embodiment.
Figs. 7A and 7B (herein collectively referred to as Fig. 7) are a flow diagram illustrating at a high level the process of extracting data to characterize session workload, according to the preferred embodiment.

### DETAILED DESCRIPTION OF THE PREFERRED EMBODIMENTS

### Internet Overview

Prior to discussing the operation of embodiments of the invention, a brief overview discussion of the Internet is provided herein.

The term 'Internet' is a shortened version of 'Internetwork', and refers commonly to a collection of computer networks that utilize the TCP/IP suite of protocols, well-known in the art of computer networking. TCP/IP is an acronym for 'Transport Control Protocol/Internet Protocol', a software protocol that facilitates communications between computers.

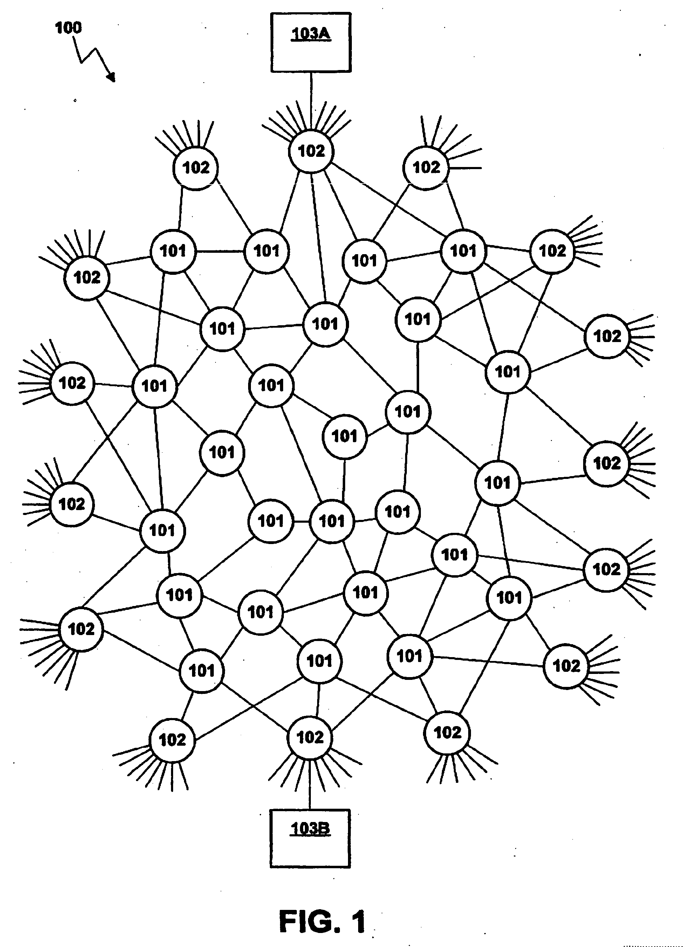

Fig. 1 is a high-level conceptual view of the Internet. The Internet has no pre-established topology, and is indefinitely extensible by adding new nodes and links. A node may have any number of links connecting it to other nodes, and these may use any of various communications technologies, having different data capacities and other characteristics. The topology of the Internet therefore becomes an extremely complex interconnected network, in which there are typically a large number of possible pathways between any two nodes.

The central part of the network, sometimes called the 'backbone', contains multiple high-speed routers 101 which receive data packets and forward these on to other nodes in the network. Typically, each router has multiple connections to other routers, and these connections have a high data capacity. For example, fiber optic links are often used between high-speed routers 101. Connected to the high-speed routers are nodes which serve as access points to the Internet 'backbone' of high-speed routers, illustrated in Fig. 1 as nodes 102. Access nodes 102 are also routers since they function to route data packets between the high-speed routers 101 and other network nodes, but they typically employ lower-speed connections. An access node may be, for example, a public Internet Service Provider which provides access to the Internet through telephone lines or other connections for a fee, or may be an access node of a large company for its internal systems. Usually, each access node 102 connects to multiple high-speed routers 101 to provide redundancy, although this is not a requirement. Each access node typically provides access to multiple host computer systems 103A, 103B (referred to generically as reference numeral 103), of which only two are illustrated in Fig. 1. Hosts 103 are the computer systems which connect to the Internet and which generate as the source or receive as the ultimate destination the data packets transmitted over the Internet. Hosts 103 may be any type of computer system, from large mainframe systems to PCs to handheld portable devices, and a single host may represent a cluster of systems. Often, a host has only one access node 102 which it uses to access the Internet (in which case it is non-redundant), although it may have multiple such access nodes for redundancy. The connection between the host and the access node is often relatively low speed (such as a telephone line or radio frequency link), but could be a high-speed link. In the case of some computer systems, such as large Internet servers which function primarily to provide information over the Internet, the host may be connected directly to high-speed routers 101 1 and therefore serve as its own access node.

It will be understood that Fig. 1 is intended as a conceptual illustration of the Internet, and that in reality the number of nodes and connections on the Internet is vastly larger than illustrated in Fig. 1, and that the topology of the connections may vary. Furthermore, it will be understood that there may be further hierarchies of types of connections and forms of access, which are not shown in Fig. 1 for clarity of illustration. I.e., there may be multiple types or classes of access node 102 through which a host connects to reach the high-speed routers 101 of the backbone, and that different hosts may connect at different levels of access node. Strictly speaking, the Internet comprises all devices coupled to it, and when a small computer system such as a PC is logged on to the Internet, it is part of the Internet in the sense that it becomes an Internet node and has an address (although the address may be only temporary). Often, the routers and connections of the Internet backbone and access nodes are referred to as the Internet, i.e., the Internet is viewed as a communications medium as opposed to a distributed processing network of computer systems. In general, the 'Internet' is used herein in the latter sense to describe the communications medium, although, depending on the context, the former sense may be employed.

Networked systems typically follow a client server architecture. A 'client' is a member of a class or group that utilizes the services of another class or group to which it is not related. In the context of a computer network such as the Internet, a client is a process (i.e., roughly a program or task) that requests a service provided by another program. The client process utilizes the requested service without needing to know any working details about the other program or the server itself. In networked systems, a client is usually a computer that accesses shared network resources provided by another computer (i.e., a server).

A server is typically a one or more remote computer systems accessible over a communications medium such as the Internet. The server scans and searches for information sources. Based upon such requests by the user, the server presents filtered, electronic information to the user as server response to the client process. The client process may be active in a first computer system, and the server process may be active in a second computer system; the processes communicate with one another over a communications medium that allows multiple clients to take advantage of the information gathering capabilities of the server. A server can thus be described as a network computer that runs administrative software that controls access to all or part of the network and its resources, such as data on a disk drive. A computer acting as a server makes resources available to computers acting as workstations on the network.

Client and server can communicate with one another utilizing the functionality provided by a hypertext transfer protocol (HTTP). The World Wide Web (WWW), or simply, the 'web', includes all servers on the Internet adhering to this protocol, which are accessible to clients via a Universal Resource Locator (URL) address. Internet services can be accessed by specifying Universal Resource Locators that have two basic components: a protocol to be used and an object pathname. For example, the Universal Resource Locator address, 'http://www.uspto.gov' specifies a hypertext transfer protocol ('http') and a name ('www.uspto.gov') of the server for the U.S. Patent & Trademark Office. The server name is associated with a unique, numeric value (i.e., a TCP/IP address). Although the server may in fact comprise multiple computer systems which collectively perform the server function, the server is a single 'host' in the sense that it has a single TCP/IP address to which it responds, and the exact structure of the server (number of devices, division of function, and so forth) is shielded from the view of the client.

Active within the client is a first process that establishes the connection with the server to initiate an HTTP session, sends HTTP requests to the server within the established HTTP session, receives HTTP responses from the server within the HTTP session, and presents information to the user. Conventionally, this first process is an interactive browser application. The server itself executes corresponding server software that presents information to the client in the form of HTTP responses. The HTTP responses correspond to 'web pages' constructed from a Hypertext Markup Language (HTML), or other server-generated data.

The browser retrieves a web page from the server and displays it to the user at the client. A 'web page' (also referred to as a 'page' or a 'document') is typically a data file written in a hyper-text language, such as HTML, that may have text, graphic images, and even multimedia objects, such as sound recordings or moving video clips associated with that data file, although the web page could also be simply an image. A hyper-text page contains control tags and data. The control tags identify the structure: for example, the headings, subheadings, paragraphs, lists, and embedding of images. The data consists of the contents, such as text or multimedia, that will be displayed or played to the user. A browser interprets the control tags and formats the data according to the structure specified by the control tags to create a viewable object that the browser displays, plays or otherwise performs to the user. A control tag may direct the browser to retrieve a page from another source and place it at the location specified by the control tag. In this way, the browser can build a viewable object that contains multiple components, such as spreadsheets, text, hotlinks, pictures, sound, chat-rooms, and video objects. A web page can be constructed by loading one or more separate files into an active directory or file structure that is then displayed as a viewable object within a graphical user interface.

In the simple case described above, information transfer is basically one-way, the client browser only requesting the information (as by identifying a desired document by its URL) and the server providing it. It is also possible within the HTTP session for a client to provide information to a server according to a server designated format. A server may specify a format in which information from the client is to be sent by providing an HTML form on the web. The client browser accesses the server and retrieves the HTML form, just as it would any web page. The browser formats the HTML form for interactive display to the user. The form typically contains one or more interactive input fields, in which the user can specify input data. This input data might be text data which is directly entered by the user in an interactive input field (as, e.g., a credit card number), or it might be data obtained from a file on the client system, which is specified by the user in an interactive input field. The user data as specified is formatted according to the HTML form specification. This formatted user data (known as 'form data', which may be multi-part) is then sent to the server in an HTTP request. The server then processes the request including the form data, and responds to the client appropriately.

Since a single HTTP session may comprise multiple data exchanges going from client to server and from server to client, and require a server to not only provide data to the client but to update data maintained by the server or some other system as well, the entire interactive HTTP session may be viewed as a complex finite state process. In order to properly service the client, the server typically maintains session-persistent data for each respective active session, this session-persistent data persisting in the server for the length of the session (although it may be updated with each succeeding interactive data exchange of the HTTP session).

### Detailed Description

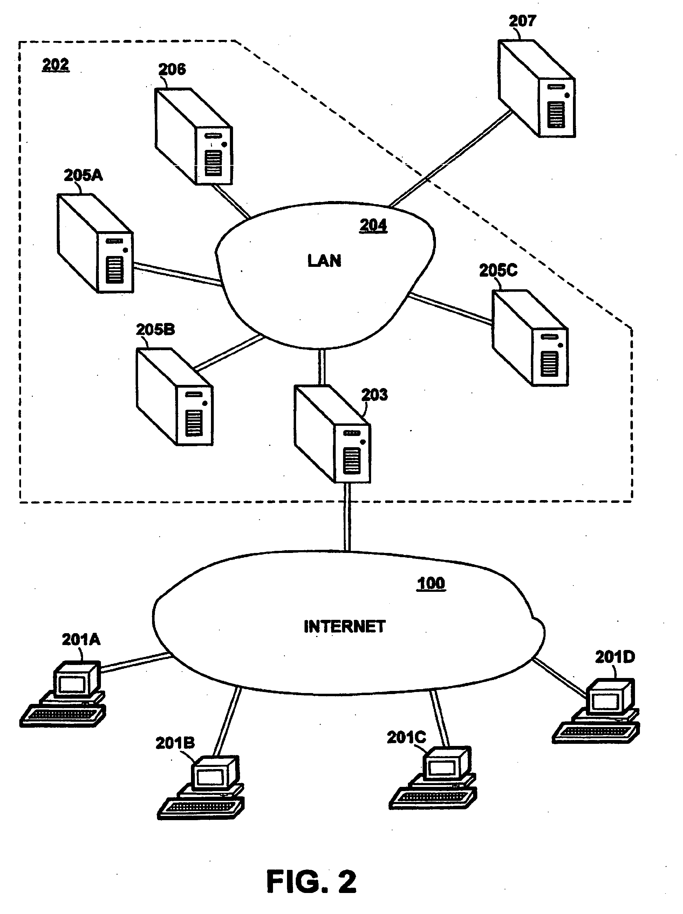

Referring to the Drawing, wherein like numbers denote like parts throughout the several views, Fig. 2 is a high-level representation of a typical web server environment for characterizing HTTP session workloads, according to the preferred embodiment of the present invention. A web serving enterprise maintains a cluster of computer systems 202 (referred to herein as the web server) for providing a web presence, i.e., generating one or more interactive web pages of information accessible over the Internet 100. From the perspective of other devices coupled to the Internet, web server 202 is a single host system 103. Clients 201 A-D (herein generically referred to as feature 201) communicating over the Internet 100 generate requests for service to web server 202. At least one of the web server systems is a gateway 203 which is coupled to the Internet. The web server further includes multiple session server systems 205A-205C (herein generically referred to as feature 205), and at least one session redundancy database system 206. The various systems of the web server communicate with one another via network 204. Network 204 is preferably a local area network (LAN), such as an Ethernet local area network, although other networks are possible.

In operation, gateway 203 receives data packets addressed to web server 202 over the Internet. Gateway 203 determines an appropriate destination within web server 202 for each data packet. Specifically, when a packet arrives requesting establishment of an HTTP session connection between a client 201 and web server 202, gateway 203 chooses a session server system 205 to handle the session. Once the session is established, subsequent communications from the same client within the same session are generally routed to the session server system that was originally chosen, so that only one session server system processes any particular session. Gateway systems which allocate sessions to session server systems are well known in the art, and the allocation could be based on any algorithm or criteria now known or hereafter developed. Typically, allocation attempts to balance workload among session servers, although other or additional considerations may be used. Although gateway 203 is represented in Fig. 2 as a single system interposed between the Internet 100 and LAN 204, the gateway function might alternatively be performed by multiple systems or devices. For example, a router might route data between Internet 100 and LAN 204, while the function of allocating sessions to different session servers might be performs by a separate system attached to LAN 204.

The function of session servers 205 is to process the session workload on behalf of the web server. A session server generates information requested by the client and/or processes transaction requested by the client. In the case of information to be sent to the client, this generally means that the information is formatted as an HTML document or in some other appropriate form. A session server may be able to perform all the required service by itself, but more typically the session server will need to access one or more shared databases, represented by database system 207, to service the client. For example, in the case of an on-line retailer, a session server may have a local copy of web pages representing the retailer's catalogue, but it will generally be necessary to access a shared database in order to retrieve a customer profile, check inventory, record customer selections, and do all other things necessary to complete an on-line sale transaction. In some cases, the client simply wants information from the shared database, and the session server functions primarily to access the database system 207 and format the data in a client appropriate form (e.g., for viewing on a web browser). Because the session server 205 accesses the shared database 207 on behalf of clients 201 in order to service client requests, it is sometimes referred to as a middle tier system or middle tier server..

A database system 207 which maintains a shared database for use by multiple session servers may be part of the web server enterprise, or may be a database maintained completely independently of the web server enterprise. Although database system 207 is shown coupled to LAN 204, as might be typical of a database system which internal to the web server enterprise, database system 207 might alternatively communicate with session servers 205 via any communication link or network or combination thereof, including the Internet.

At least one session redundancy database system 206, which is separate from session servers 205, maintains a database of redundant session-persistent data, also referred to herein as the redundant session database. Conventionally, the purpose of the redundant session database is to prevent data loss and provide seamless recovery in the event that one of the session servers 205 becomes unavailable. Specifically, if a session server 205 becomes unavailable, gateway 203 selects a respective substitute session server for each active session on the unavailable session server, as new data packets arrive from the clients. Data packets relating to previously established sessions contain a session identifier of the session to which they relate. Upon determining that this session was previously assigned to a session server which is now unavailable, the gateway assigns it to a successor session server, and routes it accordingly. The successor session server accesses session redundancy database system 206 to obtain the session persistent data of the session (which would have otherwise been maintained by the unavailable session server). From the data in the redundant session database, the successor session server is able to reconstruct the state of the session, and continue processing the session where the unavailable server had left off. The client never knows that the substitution of session servers has been made, and to the client the entire process appears seamless.

In accordance with the preferred embodiment of the present invention, the redundant session database in session redundancy database system 206 is used for an additional purpose outside the scope of its original purpose. Specifically, the data in the session redundancy database is analyzed and used to characterize session workload within web server 202. The operation of session redundancy database system is described in greater detail herein.

Fig. 2 is intended to represent a typical web server environment at a high level of generality, and is not intended to represent all components of such an environment in detail, or all possible permutations of a web server environment. Numerous variations of the environmental representation of Fig. 2 are possible, of which the following in particular are possible, the description of particular variations herein being intended by way of example only and not by way of limitation. Although a single gateway 203 and a single LAN 204 are shown for illustrative purposes, the use of a single gateway system and a single LAN obviously create reliability and availability exposures, since failure of a single component could bring down the entire web server. Therefore, it is common to provide multiple redundant gateway systems and multiple redundant communications paths among the systems of the web server cluster. Furthermore, although database system 207 is shown as a single monolithic entity, it in fact may comprise multiple computer systems upon which data is stored and/or operations performed in a distributed fashion. There may in fact be multiple databases having different organization and interfaces, all accessed by the same set of session servers, and one or more databases may be stored redundantly on multiple systems. Although network 204 is described as a local area network, network could be any set of communication links, network or combination of networks which allows the various web server devices to communicate with one another, and may include redundant links. Although four clients 201 are represented as single-user workstations, a client could be any entity which might generate service requests to the web server, and could include processes executing on large, multi-user systems; furthermore, the number of clients may vary, and is typically significantly larger than the four clients represented for illustrative purposes in Fig. 2.

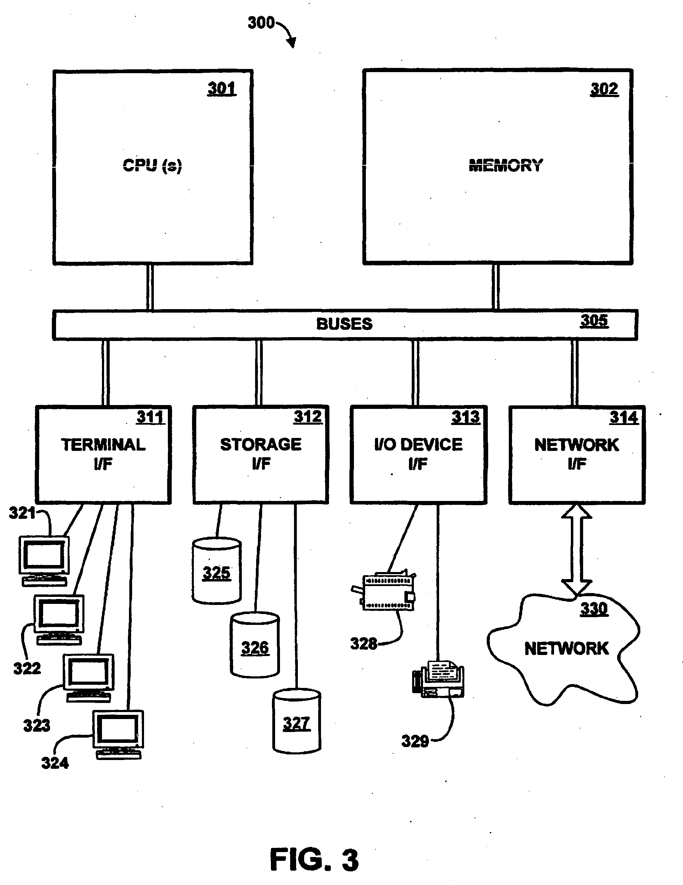

Fig. 3 is a high-level block diagram of the major hardware components of a computer system 300 of web server 202, according to the preferred embodiment. System 300 is a generalized system representation which could represent the hardware components of a session server system 205, or could represent the hardware components of session redundancy database system 206, or some other system. CPU 301 is at least one general-purpose programmable processor which executes instructions and processes data from main memory 302. Main memory 302 is preferably a random access memory using any of various memory technologies, in which data is loaded from storage or otherwise for processing by CPU 301.

One or more communications buses 305 provide a data communication path for transferring data among CPU 301, main memory 302 and various I/O interface units 311-314, which may also be known as I/O processors (IOPs) or I/O adapters (IOAs). The I/O interface units support communication with a variety of storage and I/O devices. For example, terminal interface unit 311 supports the attachment of one or more user terminals 321-324. Storage interface unit 312 supports the attachment of one or more direct access storage devices (DASD) 325-327 (which are typically rotating magnetic disk drive storage devices, although they could alternatively be other devices, including arrays of disk drives configured to appear as a single large storage device to a host). I/O device interface unit 313 supports the attachment of any of various other types of I/O devices, such as printer 328 and fax machine 329, it being understood that other or additional types of I/O devices could be used. Network interface 314 supports a connection to one or more external networks 330 for communication with one or more other digital devices. Network 330 may represent either network 204 or some set of multiple networks, and could be embodied as any of various local or wide area networks known in the art.

It should be understood that Fig. 3 is intended to depict the representative major components of system 300 at a high level, that individual components may have greater complexity than represented in Fig. 3, that components other than or in addition to those shown in Fig. 3 may be present, and that the number, type and configuration of such components may vary, and that a large computer system will typically have more components than represented in Fig. 3. Several particular examples of such additional complexity or additional variations are disclosed herein, it being understood that these are by way of example only and are not necessarily the only such variations.

Although only a single CPU 301 is shown for illustrative purposes in Fig. 3, computer system 300 may contain multiple CPUs, as is known in the art. Although main memory 302 is shown in Fig. 3 as a single monolithic entity, memory 302 may in fact be distributed and/or hierarchical, as is known in the art. E.g., memory may exist in multiple revels of caches, and these caches may be further divided by function, so that one cache holds instructions while another holds non-instruction data which is used by the processor or processors. Memory may further be distributed and associated with different CPUs or sets of CPUs, as is known in any of various so-called non-uniform memory access (NUMA) computer architectures. Although communications buses 305 are shown in Fig. 3 as a single entity, in fact communications among various system components is typically accomplished through a complex hierarchy of buses, interfaces, and so forth, in which higher-speed paths are used for communications between CPU 301 and memory 302, and lower speed paths are used for communications with I/O interface units 311-314. Buses 305 may be arranged in any of various forms, such as point-to-point links in hierarchical, star or web configurations, multiple hierarchical buses, parallel and redundant paths, etc. For example, as is known in a NUMA architecture, communications paths are arranged on a nodal basis. Buses may use, e.g., an industry standard PCI bus, or any other appropriate bus technology. While multiple I/O interface units are shown which separate system buses 305 from various communications paths running to the various I/O devices, it would alternatively be possible to connect some or all of the I/O devices directly to one or more system buses.

Computer system 300 depicted in Fig. 3 has multiple attached terminals 321-324, such as might be typical of a multi-user 'mainframe' computer system. The actual number of attached devices may vary, and the present invention is not limited to systems of any particular size. User workstations or terminals which access computer system 300 might also be attached to and communicate with system 300 over network 330. Computer system 300 may alternatively be a system containing no attached terminals or only a single operator's console containing only a single user display and keyboard input. Furthermore, while certain functions of the invention herein are described for illustrative purposes as embodied in a single computer system, these functions could alternatively be implemented using a distributed network of computer systems in communication with one another, in which different functions or steps described herein are performed on different computer systems.

While various system components have been described and shown at a high level, it should be understood that a typical computer system contains many other components not shown, which are not essential to an understanding of the present invention. In the preferred embodiment, computer system 300 is a computer system based on the IBM i/Series^{™} architecture, it being understood that the present invention could be implemented on other computer systems.

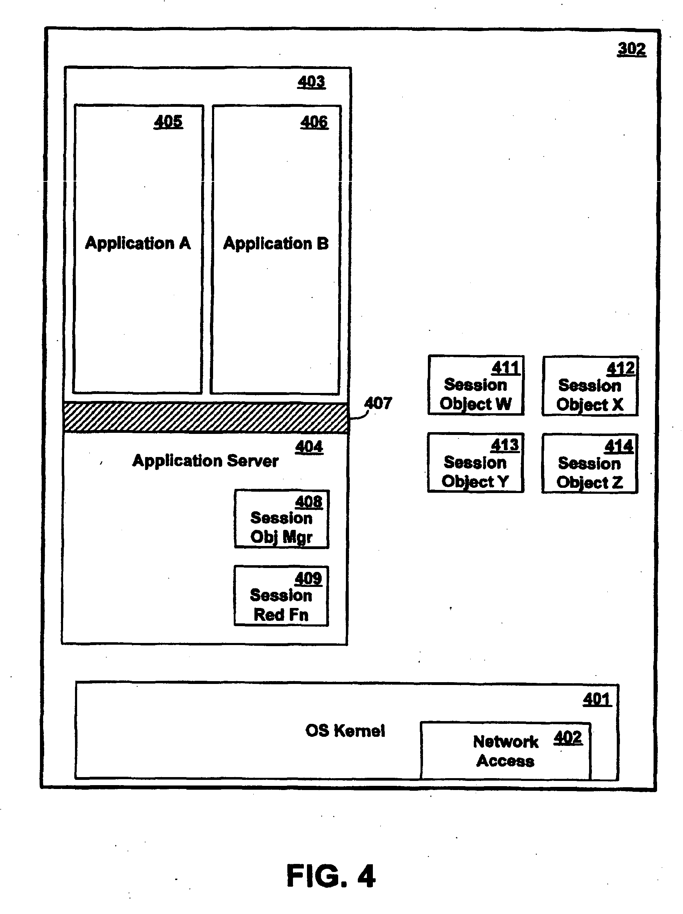

Fig. 4 is a conceptual illustration of the major software components of a session server 205, represented as components of memory 302, according to the preferred embodiment. Operating system kernel 401 is executable code and state data providing various low-level software functions, such as device interfaces, management of memory pages, management and dispatching of multiple tasks, etc. as is well-known in the art. In particular, operating system 401 includes at least one network access function 402. Network access function 402 is software which communicates through network interface 314 with one or more external networks, particularly network 204. Network access function 402 generally handles network communications on behalf of applications executing in session server system 205, which specifically includes application server 404 performing functions on behalf of middle-tier session applications 405, 406. Although network access function 402 is shown as part of operating system kernel 401, it could alternatively be a separate software module.

A session server facility 403 performs service on behalf of a client within an HTTP session. Session server facility 403 may be regarded as a middle tier facility because, where necessary, the session server facility accesses one or more shared databases 207 on behalf of clients to process client requests. The session server facility presents an interactive world wide web interface to multiple clients 201 which communicate with session server system 205 over the Internet 100. I.e., session server facility 403 generates interactive web pages in HTML or other appropriate format for viewing by web browser applications executing in client systems 201. To clients 201, session server facility 403 functions as the server, and clients are unaware of any databases or other applications behind session server facility 403. In particular, clients are unaware of any functions or applications which maintain redundant session data.

In the preferred embodiment, session server facility 403 comprises an application server 404, and one or more session server applications 405, 406 (of which two are illustrated in Fig. 4, it being understood that the number could vary). Application server 404 is a framework or shell for generally supporting middle tier applications in a client-server environment, and particularly for supporting such applications where the client is an interactive web browser application accessing the middle tier over the Internet. Among other features, application server 404 contains a set of functions (connection facilities) for accessing databases 207 in a variety of commonly used native database formats; for handling communications with clients 201 within respective HTTP sessions. The session server applications 405, 405 are code developed for performing some set of specific server functions on behalf of clients 103. Application server 404 provides incoming client request data to the applications 405, 406. These requests often require access to a database of shared data 207, although some applications might not require such access. Where database access is required by an application 405, 406, it invokes the connection facilities of application server 404 to access a database system 207. Application server 404 receives responses from the database, which are generally forwarded to the appropriate application. Data responses to the client are generated by the application 405, 406, and transmitted through the application server 404. Applications 405, 406 communicate with application server 404 across a common interface 407, which is independent of the application or database to be accessed. In the preferred embodiment, interface 407 conforms to a JAVA 2 Enterprise Edition (J2EE) interface specification, although other interfaces might alternatively be used. In the preferred embodiment, application server 404 is an the IBM WEBSPHERE^{™} application server, it being understood that other forms of application server facility could alternatively be used.

Application server 404 includes session object manager function 408 which maintains HTTP session-persistent data. Preferably, session-persistent data is maintained in the form of multiple session-persistent data objects 411-414, and specifically, it is preferred that each session-persistent data object 411-414 be a data structure conforming to the Enterprise JAVA Bean (EJB) specification promulgated by Sun Microsystems, it being understood that session-persistent data could be maintained in some other form. There is one session-persistent data object for each active session. Each session-persistent data object 411-414 persists in the session server through the lifetime of the session, and is typically deleted when the session terminates. Four session-persistent data objects 411-414 are illustrated in Fig. 4, it being understood that the number session objects, and the number of active sessions at any given time, is typically much larger. Session object manager 408 provides access functions to access the session-persistent data objects in order to obtain data therefrom, to update data, and so forth. Session object manager also allocates new session-persistent data objects and deallocates objects when the session terminates.

Application server 404 further includes a session persistent data redundancy function 409 which automatically provides redundancy for session persistent data in data objects 411-414. Specifically, as session-persistent data objects 411 and 414 are allocated, modified, and de-allocated, redundancy function 409 transmits redundant data containing the allocations, modifications and de-allocations to session redundancy database system 206 over network 204. Redundancy system 206 uses this redundant data from redundancy function 409 to maintain its database of redundant session data. Redundancy system 206 receives this redundant data from all server systems 205 in cluster of systems forming web server 202, so that the database of redundant session data in redundancy system 206 generally represents the respective current session states of all the active HTTP sessions in the web server (neglecting transmission delays, queuing and other processing delays, etc.).

Redundancy function 409 transmits redundant data update messages to redundancy system 206 approximately contemporaneously with transmitting outgoing messages to clients 201. I.e., changes to session-persistent data as a result of processing in the session server are held and accumulated in the session server 205 until the session server is ready to transmit a response to the client. When the response is transmitted to the client, the redundancy function 409 contemporaneously transmits the accumulated session-persistent data changes to redundancy system 206. In this manner, only session data state from the perspective of the client is maintains in redundancy system 206.

Session servers 205 typically contain additional data not shown in Fig. 4. For example, session servers 205 may cache some data from shared database system 207 and/or some web pages for use by session server applications 405, 406 in generating responses to clients. Various other state data may be maintained by session serves.

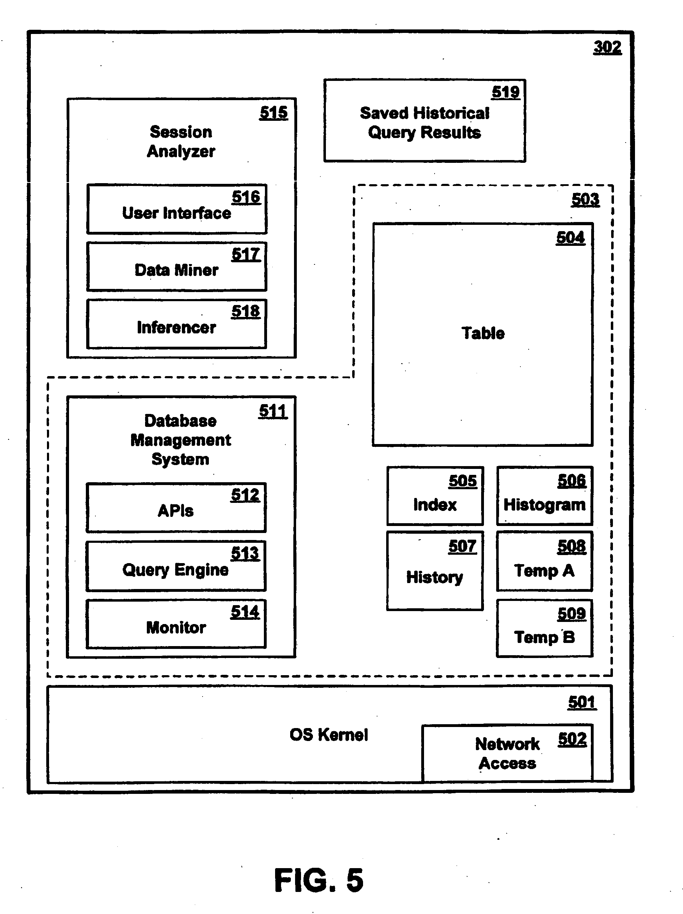

Fig. 5 is a conceptual illustration of the major software components of session redundancy database system 206, represented as components of memory 302, according to the preferred embodiment. Operating system kernel 501 and network access function 502 provide function analogous to those of operating system kernel 401 and network access function 402, respectively, of session server system 205. While the functions provided are analogous, operating systems 401 and 501 are not necessarily identical (although they could be). Network access function 502 communicates through network interface 314 to one or more networks, which specifically includes network 104. Network access function 502 generally handles network communications on behalf of applications executing in redundancy database system 206, which specifically includes database management system 511. Although network access function 502 is shown as part of operating system kernel 501, it could alternatively be a separate software module.

A structured database 503 maintains redundant session-persistent data on behalf of the various session servers 205. Database 503 contains one or more tables 504 (of which one is shown in Fig. 5), each having a plurality of entries or records, each entry containing at least one (and usually many) fields, as is well known in the art. Database table 504 (or tables) contains redundant session-persistent data organized in such a way as to be accessible to reconstruct particular sessions. Associated with the database table or tables are one or more auxiliary data structures 505-508, also sometimes referred to as metadata. Auxiliary data structures characterize the structure of the database and data therein, and are useful in various tasks involved in database management, particularly in executing queries against the database. Examples of auxiliary data structures include database index 505, histogram 506, and historical data 507, it being understood that other types of metadata may exist.

Database management system 511 provides basic functions for the management of database 503. Database management system 511 may theoretically support an arbitrary number of database tables, which may or may not have related information, although only one table is shown in Fig. 5. Database management system 511 preferably allows users to perform basic database operations, such as defining a database, altering the definition of the database, creating, editing and removing records in the database, retrieving records from the database, defining database indexes, and so forth.

Database management system 511 is preferably a general-purpose database management system having a variety of commonly used functions for managing a database. I.e., although database 503 exists for the purpose of maintaining redundant session-persistent data, and therefore may not require certain functional capabilities used in some other databases, it is preferably implemented using general purpose database software having full function capability. These functions exist in the database management software because it is a general-purpose database manager designed to manage almost any type of database (as opposed to custom-written database software, designed specifically for session-persistent data).

Among the functions supported by database management system 511 is an application programming interface (API) 512 for receiving commands from external processes; a query engine 513 for executing complex queries against data in the database, and a monitor 514 for monitoring database activity and generating historical statistical information in history metadata 507. Database management system 511 may further contain any of various more advanced database functions. Although database management system 511 is represented in Fig. 5 as an entity separate from operating system kernel 501, it will be understood that in some computer architectures various database management functions are integrated with the operating system.

In addition to internal state information and other data, database management system 511 may generate numerous temporary data structures during execution, represented as data structures 508-509. These temporary structures in particular are often generated during query execution to hold intermediate query result. The number of such temporary structures can vary considerably, and could be much larger.

Although one database 503 having one database table 504, one index 505, one histogram 506, and one historical data table 507 are shown in Fig. 5, the number of such entities may vary, and could be much larger. The computer system may contain multiple database tables, and may have associated with it multiple indexes, histograms, or other auxiliary data structures not illustrated. Alternatively, some entities represented in Fig. 5 might not be present in all databases. Although database management system 511 is represented in Fig. 5 as part of database 503, the database management system, being executable code, is sometimes considered an entity separate from the 'database', i.e., the data.

In the preferred embodiment, a separate session analyzer 515 obtains data from database 503 to characterize the session workload in session servers 205. Session analyzer 515 is represented in Fig. 5 as being resident in session redundancy database system 206. However, being a software entity independent of database 303, session analyzer 515 could alternatively reside on some other system connected to LAN 204, or could even reside on a more remotely connected system. Session analyzer is typically a facility which is used by system administrators or similar personnel of the web server enterprise, and is not generally available to the public. It preferably includes an interactive user interface 516 for entering commands and viewing results, While it could be accessed from remote terminals connected over a network, in general access will be restricted, and it may be accessible only from local terminals of system 206.

Session analyzer 515 comprises a data mining function 517 and, optionally, a rules-based intelligent inferencing function 518. Data mining function 517 gathers data useful in characterizing session workload. In particular, the data mining function accesses database management system 511 through API 512 to obtain information from database 303, using standard database management functions to perform queries of the database, monitor database activity, and so forth. Although these functions are available in the database management system 511, as explained above, they are not normally used for maintaining and providing redundant session-persistent data. Data mined by mining function 517 may be accumulated over time and saved as historical data in historical data file 519. Intelligent inferencing function 518 is a rules-based expert system which uses data gathered by the data mining function to trigger tuning recommendations for altering configurable tuning parameters of the session systems 205 and/or redundancy system 206. Session analyzer function is described in further detail herein.

Various software entities are represented in Figs. 4 and/or 5 as being separate entities or contained within other entities. However, it will be understood that this representation is for illustrative purposes only, and that particular modules or data entities could be separate entities, or part of a common module or package of modules. Furthermore, although a certain number and type of software entities are shown in the conceptual representations of Figs. 4 and 5, it will be understood that the actual number of such entities may vary, and in particular, that in a complex web server environment, the number and complexity of such entities is typically much larger. Additionally, although the various software components are depicted in Figs. 4 and 5 on two computer systems, these entities might alternatively be contained on a number of systems other than two.

While the software components of Figs. 4 and 5 are shown conceptually as residing in memory 302, it will be understood that in general the memory of a computer system will be too small to hold all programs and data simultaneously, and that information is typically stored in data storage devices 325-327, comprising one or more mass storage devices such as rotating magnetic disk drives, and that the information is paged into memory by the operating system as required. In particular, database 503 is typically much too large to be loaded into memory, and typically only a small portion of the total number of database records is loaded into memory at any one time. The full database 503 is typically recorded in disk storage 325-327. Furthermore, it will be understood that the conceptual representation of Figs.4 and 5 is not meant to imply any particular memory organizational model, and that system 205 or system 206 might employ a single address space virtual memory, or might employ multiple virtual address spaces which overlap.

In accordance with the preferred embodiment, session applications 405, 406 executing on session servers 205 process client transaction requests. Session applications 405, 406 utilize the function of application server 404 to manage session-persistent data objects 411-414, in which session state data is maintained. Application server 404 automatically backs up state data in session-persistent data objects 411-414 to session redundancy database system 206 as changes are made during the session, so that the redundant session persistent database 503 reflects current session state, and changes to the database reflects session activity.

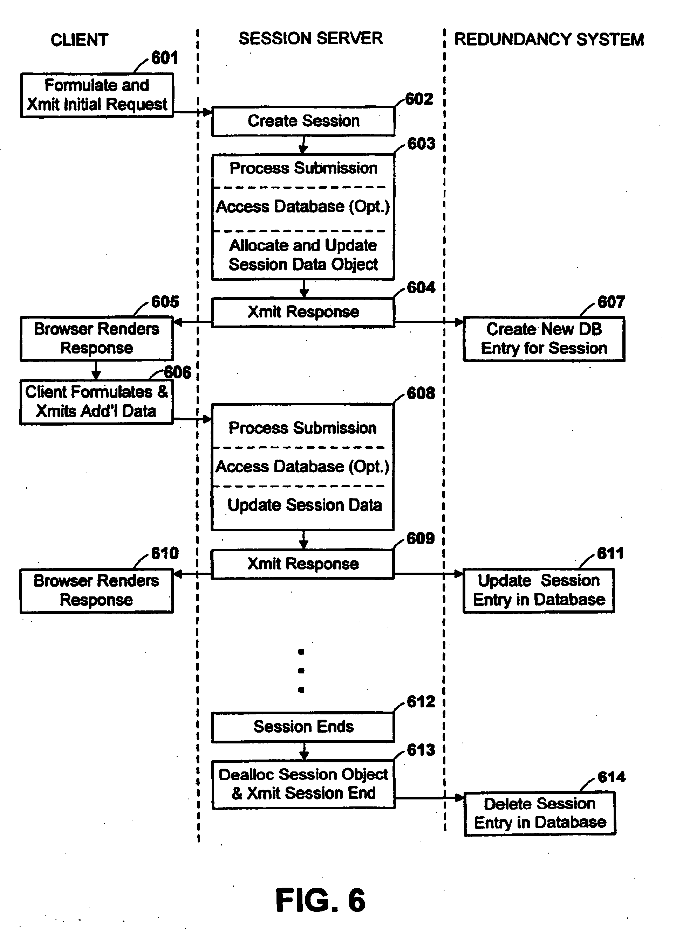

Fig. 6 is a flow diagram illustrating at a high level the process of servicing client requests and maintaining session state data, according to the preferred embodiment. Referring to Fig. 6, the flow diagram is divided into three partitions running vertically, these indicating the actions performed at each of the client 201, the session server 205, and the session redundancy database system 206.

A client formulates a request for remote service from a web server, and transmits the request over the Internet to the web server to initiate a session in the web server (step 601). In the preferred embodiment, the client executes an interactive web browser process, and the initial request is typically a request to access a web page maintained by the web server, such as a home page. Upon receipt of the request at the web server's gateway, a session is created and the request is assigned to a session server (step 602). The session server then processes the client's submission to generate an appropriate response (step 603). Processing may involve an arbitrary number of steps of arbitrary complexity, depending on the session server application and the nature of the request. Processing the submission, as represented by step 603, may optionally include accessing data in shared database system 207. Processing the request includes allocating a session-persistent data object to record session state, and updating the session-persistent data as required.

When processing of the client submission is finished, session server 205 transmits a response to the client (step 604). The client's browser receives the response and renders it into a form (a web page) viewable by the client (step 605). Contemporaneously with transmitting a response to the client at step 604, the session server also transmits a session state update message to session redundancy database system 206. The message indicates that a session object has been allocated for the new session, and contains the current session state data. In response to the message, redundancy system 206 creates a new entry in database 503 for the new session, this new database entry recording the session state data contained in the session-persistent data object (step 607). Although the entry in database 503 records all session-persistent data in a manner enabling a new session persistent data object to be reconstructed in the event of unavailability of the session server, it does not necessarily record all the data using the identical data structure or format used in the session-persistent data object.

The client may then continue the interactive session by formulating one or more additional data submissions and transmitting them to the web server (step 606). These additional submissions are received by the session server and processed to generate a response (step 608). As before, processing may optionally include accessing data in shared database system 207. Processing the request includes updating the session state recorded in session-persistent data object, as required.

When processing of the client submission is finished at step 608, session server 205 transmits a response to the client (step 609). The client's browser receives the response and renders it into a form viewable by the client (step 610). Contemporaneously with transmitting a response to the client at step 609, the session server also transmits a session state update message to session redundancy database system 206 indicating that the persistent session data has been updated, the session state update message containing the updated data. In response to the message, redundancy system 206 updates the entry in database 503 for the current session (step 611). This process of formulating submissions, processing submissions and responding may continue an indefinite number of times within the session.

At some point the session ends, generally as a result of a timeout without any activity by the client or an explicit disconnection of the client, generally represented as step 612. When the application server 404 in the session server detects an end of session event, it deallocates the session-persistent data object and sends a message to the session redundancy database system, indicating that the session has ended (step 613). The redundancy system responds by deleting the corresponding entry in the session database (step 614).

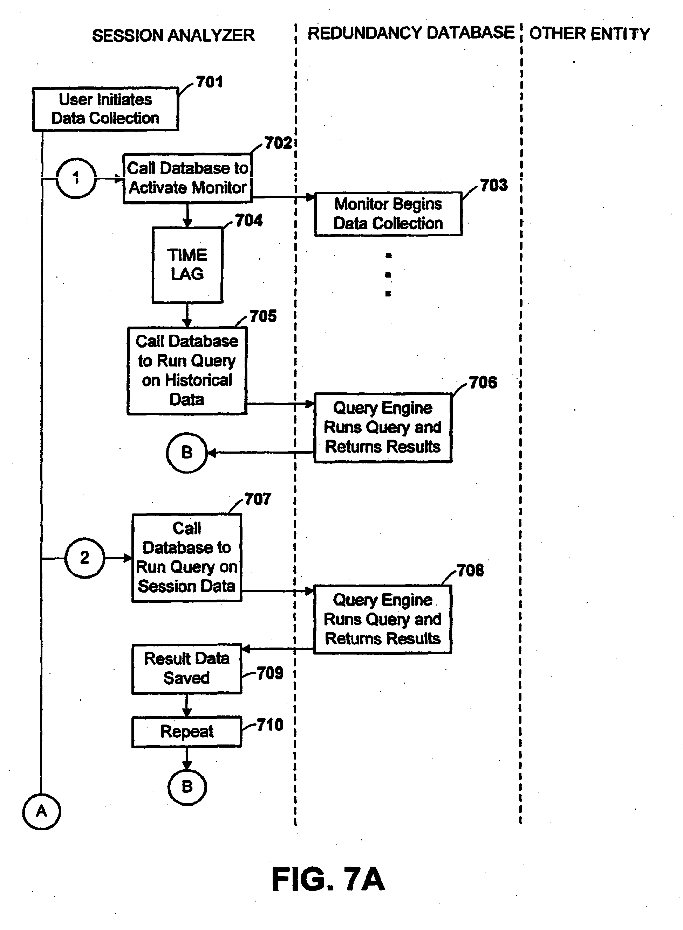

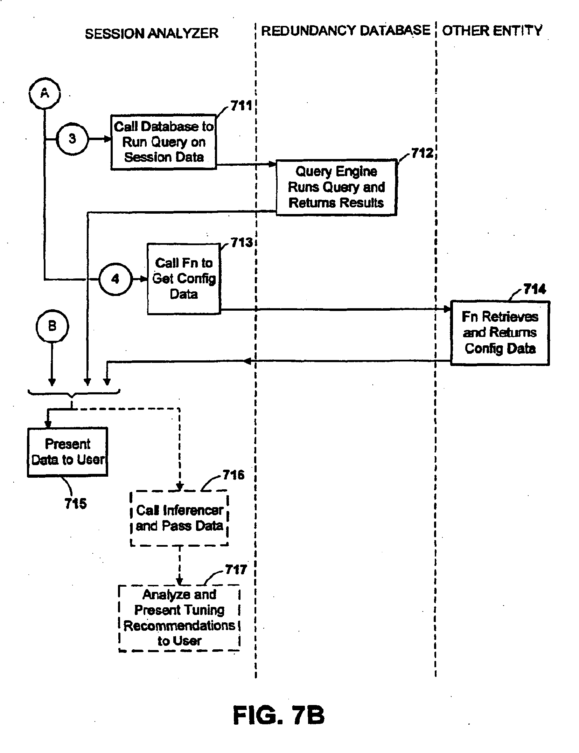

Figs. 7A and 7B (herein collectively referred to as Fig. 7) are a flow diagram illustrating at a high level the process of extracting data from the database of redundant session-persistent data 503 and elsewhere to characterize session workload, according to the preferred embodiment. The flow diagram of Fig. 7 is divided into three partitions running vertically, these indicating the actions performed at each of the session analyzer 515, the database 503, and some other entity from which useful data can be obtained.

Referring to Fig. 7, a user such as a system administrator interacting with the session analyzer 515 through interactive user interface 516 initiates the monitoring and collection of certain data which is useful in characterizing session workload, particularly data relating to operation of database 503 (step 701). In general, there are multiple ways in which relevant data might be collected, which may be used alone or in combination.

In a first method for collecting relevant data, the session analyzer calls the database 503 through an appropriate API 512 to activate internal monitor 514 (step 702). The monitor then commences collection of historical statistics, such data being saved within database as historical data 507 (step 703). The monitor 514 is typically an integral part of a large database management system, and is useful in collecting statistics for optimizing queries, analyzing database performance, and so forth. In some databases, the monitor may be activated by default, or may have been activated by other means, so that it is not always necessary to explicitly activate it through session analyzer 515. Statistics are usually gathered at intervals. For example, a number of database update operations received in an interval, sizes of such updates, and so forth, can be used to calculate an average rate of arrival in the interval, average size, and so forth. The monitor actively gathers statistics during a time lag, indicated as step 704. The time lag could be specified in advance, but more typically the monitor will simply be activated for an indefinite period, and after some time has passed the user will initiate the next action to retrieve historical data by running one or more queries against it. The session analyzer calls database management system 511 using an appropriate API 512 to execute one or more queries specified by data miner 517 (step 705), and the database management system invokes query engine 513 to execute the query or queries, returning the query results to the session analyzer (step 706).

In a second method for collecting relevant data, the data miner 517 in session analyzer 515 constructs its own historical statistics by periodically submitting queries against the database by calling query engine 513 through an appropriate API 512 (step 707). The query engine then executes the query and returns results to the session analyzer (step 708). Data miner 517 saves the results (or data extracted from the results) as saved historical query result data 519 (step 709). Historical data is accumulated by periodically repeating steps 704-706 (represented for clarity in abbreviated form as step 710, it being understood that steps 707-709 could be repeated many times). For illustrative purposes, saved historical query results 519 are shown as a file or other data entity residing outside database 503. While it is possible to save the data in such a manner, it is further possible to save the data as part of database 503, i.e., to define one or more additional database tables to hold result data 519, and to use the APIs 512 and query engine 513 of database management system 511 to access saved result data 519.

In a third method for collecting relevant data, a snapshot of the workload at an instant in time can be obtained in the same manner as in the second method described above, but without the need to periodically submit queries and save historical data. I.e., data miner 517 constructs an appropriate query or queries to obtain information about the current session workload state, and submits the query (or queries) against the database by calling query engine 513 through an appropriate API 512 (step 711). Query engine 513 then executes the query and returns results to the session analyzer (step 712).

In a fourth method for collecting relevant data, data miner 517 can call certain functions in operating system 501 to obtain relatively static configuration data for redundancy system 206, and can likewise remotely call similar functions in operating systems 401 or in application server 404 to obtain static configuration data for session server systems 205 (step 713). The applicable operating system, application server or other entity responds with the requested configuration information (step 714).

In the preferred embodiment, data gathered might include any or all of the following:
Number of database update operations:
This number may be measured over a brief interval, over a relatively long interval, or multiple times over multiple intervals. This number may be aggregated for all session servers, or separately obtained for each server. The number of update operations is directly related to the number of times session state was updated in the session server as a response was transmitted to a client. It is a basic measure of the level of activity of the session server.

### Average update size:

Again, this number may be measured over one or more intervals, and may be aggregated for all servers or separately obtained for each. The size of the update is the amount of session-persistent state data which has changed for each update. This is also useful in characterizing total session workload, and excessively large numbers may indicate that session-persistent state is organized or maintained in an inefficient manner. In addition to average update size, it would be possible to report peak size and/or generate a histogram of update sizes.

### Average row size.

The row size is the amount of session-persistent data for a single session in the database, and this may vary considerably from row to row. The row size is closely related to the size of session persistent data objects 411-414 in the session servers, although the two are not identical because the data in the data objects may be structured differently. Among other things, row size is a general indication of the amount of session-persistent memory consumed by each session. Row size may be measured at a single instant in time, or may be averaged over multiple readings. Row size may be reported for individual session servers, or aggregated for all session servers. In addition to average row size, it would be possible to report peak size and/or generate a histogram of row sizes.

### Overall database size, or number of rows:

The total volume of session-persistent data, which could be measured as a number of rows, given the average row size. The overall size indicates the extent to which memory in the session servers is consumed by session-persistent data. A number of rows can be reported for each session server, or can be aggregated.Number of rows might be reported at an instant in time, or at multiple instances.

### Average column size for particular columns:

The column size is the average amount of data in a particular field, and this may vary considerably from field to field and from row to row. Column size is useful in analyzing the pattern of memory usage and identifying particular columns (fields) which use a disproportionate amount of memory. Column size may be measured at a single instant in time, or may be averaged over multiple readings. Column size may be reported for individual session servers, or aggregated for all session servers. In addition to average column size (i.e., the average size of the field for all rows), it would be possible to report peak size and/or generate a histogram of field sizes for a particular column.

### Data types being used:

Like column size, this helps understand the type of data being saved as session-persistent data and may help identify more efficient ways to represent or manipulate data.

### Average session lifespan:

This data may be useful for a variety of reasons in understanding how clients interact with the web server, and the effect this may have on performance issues, although it does not directly indicate a performance problem. Lifespan may be measured over one or multiple historical intervals, or may be a current snapshot. It could be measured separately for individual servers, although in general it will be expected that all servers exhibit similar behavior.

### Average response time for database updates:

This number may be measured over one or more intervals. In general, it measures the load on redundancy system 206. If response time is large, redundancy system is overtaxed.

### Number of writes to the database log:

This number is also related to the performance of redundancy system, and when compared with the number of update operations may indicated whether writes to the log are accumulating too long, a possible exposure.

Average wait time to disk in the redundancy system: This number also measures performance of the redundancy system and can indicate that the storage system is overtaxed.

Although specific examples of data which may be collected are given above, it will be understood that other and/or additional data could alternatively be collected

Whichever technique or techniques are used for mining data as described above, the data once gathered is presented to the user (step 715). Presenting data to the user could mean displaying data on an interactive display screen in any of various formats, including graphical formats. Presenting data could also mean outputting data on a printer or other output device, transmitting data over a network to one or more additional users, saving data on electronic media, etc.

Alternatively, in an optional embodiment, session analyzer calls inferencer 518 to make tuning recommendations regarding the web server (step 716). The inferences analyzes the data and presents recommendations to the user (step 717). Preferably, there are various tunable parameters in both the database management system 511, and more significantly, in the application servers 404 in each session server. For example, tunable parameters in the database management system might include: specification of indexes; triggers for performing certain functions, such as record deletion; file system parameters such as disk addressing and file sizes; etc. Tunable parameters in the application servers might include database connection pools; middleware memory size; process memory allocations; load balancing; etc. Setting of these tunable parameters can significantly affect performance.

Among the advantages of the technique described herein as a preferred embodiment is that it can obtain meaningful data about session workload without directly executing performance monitoring software in each of the session servers. Performance monitoring software imposes significant overhead on the monitored system, which in the case of the session servers is undesirable.The session servers already transmit redundant session state data to the redundancy system as part of maintaining session redundancy and a seamless, consistent availability of the web server to clients. Therefore, no additional overhead burden is imposed on the session servers themselves. There is some additional overhead in the redundancy system, but this overhead is relatively minor. The cost of building and maintaining database 503 is already required for redundancy, and the only additional overhead cost is that of some additional queries against the database and analysis of the query results.

In general, the routines executed to implement the illustrated embodiments of the invention, whether implemented as part of an operating system or a specific application, program, object, module or sequence of instructions, are referred to herein as 'programs' or 'computer programs'. The programs typically comprise instructions which, when read and executed by one or more processors in the devices or systems in a computer system consistent with the invention, cause those devices or systems to perform the steps necessary to execute steps or generate elements embodying the various aspects of the present invention. Moreover, while the invention has and hereinafter will be described in the context of fully functioning computer systems, the various embodiments of the invention are capable of being distributed as a program product in a variety of forms, and the invention applies equally regardless of the particular type of signal-bearing media used to actually carry out the distribution. Examples of signal-bearing media include, but are not limited to, volatile and non-volatile memory devices, floppy disks, hard-disk drives, CD-ROMs, DVDs, magnetic tape, and so forth. Furthermore, the invention applies to any form of signal-bearing media regardless of whether data is exchanged from one form of signal-bearing media to another over a transmission network, including a wireless network. Examples of signal-bearing media are illustrated in Fig. 3 as system memory 302, and as data storage devices 325-327.

Although a specific embodiment of the invention has been disclosed along with certain alternatives, it will be recognized by those skilled in the art that additional variations in form and detail may be made within the scope of the following claims.

## Claims

1. A method for characterizing HTTP session workload in a web server, comprising the computer-executed steps of:
processing (603) a plurality of HTTP sessions in a first computer system, maintaining session-persistent state data in said first computer system for said plurality of HTTP sessions;
transmitting (604) redundant session-persistent state data from said first computer system to a second computer system;
storing (607) said redundant session-persistent state data in said second computer system, said second computer system supporting recovery of session state of said plurality of HTTP sessions using said redundant session-persistent state data stored in said second computer system; and
characterizing (707) said HTTP session workload using said redundant session-persistent state data stored in said second computer system.

2. The method for characterizing HTTP session workload of claim 1, wherein said step of storing said redundant session-persistent state data in said second computer system comprises storing said redundant session-persistent state data in a structured database in said second computer system, said structured database having at least one table having a plurality of entries, each entry corresponding to a respective HTTP session of said plurality of HTTP sessions.

3. The method for characterizing HTTP session workload of claim 2, wherein said step of characterizing said HTTP session workload using said redundant session-persistent state data comprises executing one or more queries against said structured database to retrieve data stored therein.

4. The method for characterizing HTTP session workload of claim 2, wherein said step of characterizing HTTP session workload using said redundant session state data comprises monitoring changes to said structured database, and using historical data concerning changes to said structured database to characterize said HTTP session workload.

5. The method for characterizing HTTP session workload of claim 2, wherein said step of characterizing HTTP session workload using said redundant session-persistent state data comprises using data from said structured database to draw inferences with respect to tuning parameters of said first computer system, said inferences being automatically drawn by a computer-executed process.

6. The method for characterizing HTTP session workload of claim 2, wherein said step of characterizing HTTP session workload using said redundant session-persistent state data comprises using data from said structured database to derive at least one characterization parameter from the set of characterization parameters consisting of:
a) a number of database update operations measured over at least one interval;
b) an average update operation size
c) an average size of said entries;
d) an overall size of said structured database;
e) an average column size for at least one column of said structured database;
f) data types being used by entries of said structured database;
g) an average session lifespan;
h) an average response time for updates to said database;
i) a number of writes to a log of said database; and
j) an average wait time to disk in said second computer system.

7. The method for characterizing HTTP session workload of claim 1, wherein said first computer system comprises an application server supporting a session server application for processing HTTP sessions.

8. The method for characterizing HTTP session workload of claim 1, wherein said second computer system stores redundant session-persistent state data received from a plurality of first computer systems, each first computer system processing a respective plurality of HTTP sessions and maintaining session-persistent state data for the respective plurality of HTTP sessions.

9. The method for characterizing HTTP session workload of claim 1, wherein said first computer system and said second computer system are coupled to a common local area network, and wherein said step of transmitting redundant session-persistent state data from said first computer system to said second computer system comprises transmitting said redundant session-persistent state data across said local area network.

10. A computer program product for characterizing HTTP session workload of a web server, comprising:
a plurality of computer-executable instructions, wherein said instructions, when executed by at least one computer system, cause the at least one computer system to perform the steps of:
accessing redundant session-persistent state data stored in a first computer system, said redundant session-persistent state data being received in said first computer system from a second computer system, said redundant session-persistent state data representing session-persistent state maintained by said second computer system for processing a plurality of HTTP sessions by said second computer system, said redundant session-persistent state data being stored in said first computer system in a manner supporting recovery of session state of said plurality of HTTP sessions using said redundant session-persistent state data; and
characterizing said HTTP session workload using said redundant session-persistent state data accessed by said accessing step.

11. The computer program product of claim 10, wherein said redundant session-persistent state data stored in said first computer system comprises redundant session-persistent state data stored in a structured database in said first computer system, said structured database having at least one table having a plurality of entries, each entry corresponding to a respective HTTP session of said plurality of HTTP sessions.

12. The computer program product of claim 11, wherein said step of characterizing HTTP session workload using said redundant session state data comprises monitoring changes to said structured database, and using historical data concerning changes to said structured database to characterize said HTTP session workload.

13. The computer program product of claim 11, wherein said step of characterizing HTTP session workload using said redundant session-persistent state data comprises using data from said structured database to derive at least one characterization parameter from the set of characterization parameters consisting of:
a) a number of database update operations measured over at least one interval;
b) an average update operation size;
c) an average size of said entries;
d) an overall size of said structured database;
e) an average column size for at least one column of said structured database;
f) data types being used by entries of said structured database;
g) an average session lifespan;
h) an average response time for updates to said database;
i) a number of writes to a log of said database; and
j) an average wait time to disk in said first computer system.

14. An apparatus for characterizing HTTP session workloads, comprising:
a session redundancy computer system (206) having at least one processor and a data storage for storing redundant session-persistent state data received from at least one session server computer system external to said session redundancy computer system, said at least one session server computer system processing a plurality of HTTP sessions and maintaining session-persistent state data for said plurality of HTTP sessions;
wherein said session redundancy computer system is operable to support recovery of session state of said plurality of HTTP sessions using said redundant session-persistent state data stored in said data storage; and
an HTTP session analyzer function (515) embodied as a plurality of instructions executable on a computer system, said analyzer function when executed by the computer system is operable to characterize workload of said plurality of HTTP sessions on said at least one session server computer system using said redundant session-persistent state data stored in said data storage of said session redundancy computer system.

15. The apparatus of claim 14, wherein said HTTP session analyzer function resides in said session redundancy computer system and executes on said at least one processor of said session redundancy computer system.

## Patentansprüche

1. Verfahren zum Beschreiben der Arbeitslast von HTTP-Sitzungen in einem Web-Server, wobei das Verfahren die folgenden von einem Computer ausgeführten Schritte umfasst:
Verarbeiten (603) einer Vielzahl von HTTP-Sitzungen in einem ersten Computersystem, wobei sitzungsbeständige Zustandsdaten (session persistent state data) in dem ersten Computersystem für die Vielzahl der HTTP-Sitzungen aufrechterhalten werden;
Übertragen (604) von redundanten sitzungspersistenten Zustandsdaten von dem ersten Computersystem an ein zweites Computersystem;
Speichern (607) der redundanten sitzungsbeständigen Zustandsdaten in dem zweiten Computersystem, wobei das zweite Computersystem die Wiederherstellung des Sitzungszustands der Vielzahl der HTTP-Sitzungen unter Verwendung der redundanten sitzungsbeständigen Zustandsdaten unterstützt, die in dem zweiten Computersystem gespeichert werden; und
Beschreiben (707) der Arbeitslast von HTTP-Sitzungen unter Verwendung der redundanten sitzungsbeständigen Zustandsdaten, die in dem zweiten Computersystem gespeichert werden.

2. Verfahren zum Beschreiben der Arbeitslast von HTTP-Sitzungen nach Anspruch 1, wobei der Schritt des Speicherns der redundanten sitzungsbeständigen Zustandsdaten in dem zweiten Computersystem das Speichern der redundanten sitzungsbeständigen Zustandsdaten in einer strukturierten Datenbank in dem zweiten Computersystem umfasst, wobei die strukturierte Datenbank mindestens eine Tabelle aufweist, die eine Vielzahl von Einträgen hat, wobei jeder Eintrag einer jeweiligen HTTP-Sitzung der Vielzahl der HTTP-Sitzungen entspricht.

3. Verfahren zum Beschreiben der Arbeitslast von HTTP-Sitzungen nach Anspruch 2, wobei der Schritt des Beschreibens der Arbeitslast von HTTP-Sitzungen unter Verwendung der redundanten sitzungsbeständigen Zustandsdaten das Ausführen von einer oder mehreren Abfragen der strukturieren Datenbank umfasst, um darin gespeicherte Daten abzurufen.

4. Verfahren zum Beschreiben der Arbeitslast von HTTP-Sitzungen nach Anspruch 2, wobei der Schritt des Beschreibens der Arbeitslast von HTTP-Sitzungen unter Verwendung der redundanten Sitzungs-Zustandsdaten das Überwachen von Änderungen an der strukturieren Datenbank und das Verwenden von historischen Daten umfasst, die Änderungen an der strukturieren Datenbank betreffen, um die Arbeitslast von HTTP-Sitzungen zu beschreiben.

5. Verfahren zum Beschreiben der Arbeitslast von HTTP-Sitzungen nach Anspruch 2, wobei der Schritt des Beschreibens der Arbeitslast von HTTP-Sitzungen unter Verwendung der redundanten sitzungsbeständigen Zustandsdaten das Verwenden von Daten aus der strukturierten Datenbank umfasst, um Rückschlüsse in Bezug auf Abstimmparameter des ersten Computersystems zu ziehen, wobei die Rückschlüsse automatisch von einem Prozess gezogen werden, der von einem Computer ausgeführt wird.

6. Verfahren zum Beschreiben der Arbeitslast von HTTP-Sitzungen nach Anspruch 2, wobei der Schritt des Beschreibens der Arbeitslast von HTTP-Sitzungen unter Verwendung der redundanten sitzungsbeständigen Zustandsdaten das Verwenden von Daten aus der strukturierten Datenbank umfasst, um mindestens einen Beschreibungsparameter von dem Satz der Beschreibungsparameter abzuleiten, der aus Folgendem besteht:
mehreren Datenbank-Aktualisierungsoperationen, die über mindestens ein Intervall gemessen werden;
eines durchschnittlichen Umfangs einer Aktualisierungsoperation;
einer durchschnittlichen Größe der Einträge;
einer Gesamtgröße der strukturierten Datenbank;
einer durchschnittlichen Spaltengröße für mindestens eine Spalte der strukturierten Datenbank;
Datentypen, die von Einträgen der strukturierten Datenbank verwendet werden;
einer durchschnittlichen Sitzungsdauer;
einer durchschnittlichen Antwortzeit bei Aktualisierungen der Datenbank;
mehreren Schreiboperationen in ein Protokoll der Datenbank; und
einer durchschnittlichen Wartezeit auf die Platte in dem zweiten Computersystem.

7. Verfahren zum Beschreiben der Arbeitslast von HTTP-Sitzungen nach Anspruch 1, wobei das erste Computersystem einen Anwendungs-Server umfasst, der eine Anwendung eines Sitzungsservers zur Verarbeitung von HTTP-Sitzungen unterstützt.

8. Verfahren zum Beschreiben der Arbeitslast von HTTP-Sitzungen nach Anspruch 1, wobei das zweite Computersystem redundante sitzungsbeständige Zustandsdaten speichert, die es von einer Vielzahl von ersten Computersystemen empfangen hat, wobei jedes erste Computersystem eine jeweilige Vielzahl von HTTP-Sitzungen verarbeitet und sitzungsbeständige Daten für die jeweilige Vielzahl der HTTP-Sitzungen aufrechterhält.

9. Verfahren zum Beschreiben der Arbeitslast von HTTP-Sitzungen nach Anspruch 1, wobei das erste Computersystem und das zweite Computersystem mit einem gemeinsamen lokalen Netzwerk verbunden sind, und wobei der Schritt des Übertragens von redundanten sitzungsbeständigen Zustandsdaten von dem ersten Computersystem an das zweite Computersystem das Übertragen der redundanten sitzungsbeständigen Daten über das lokale Netzwerk umfasst.

10. Computerprogrammprodukt zum Beschreiben der Arbeitslast von HTTP-Sitzungen eines Webservers, wobei das Computerprogrammprodukt Folgendes umfasst:
eine Vielzahl von Befehlen, die von einem Computer ausgeführt werden können, wobei die Befehle, wenn sie von mindestens einem Computersystem ausgeführt werden, das mindestens eine Computersystem veranlassen, die folgenden Schritte durchzuführen:
Zugreifen auf redundante sitzungsbeständige Zustandsdaten, die in einem ersten Computersystem gespeichert werden, wobei die redundanten sitzungsbeständigen Zustandsdaten in dem ersten Computersystem von einem zweiten Computersystem empfangen werden, wobei die redundanten sitzungsbeständigen Zustandsdaten einen sitzungsbeständigen Zustand darstellen, der von dem zweiten Computersystem aufrechterhalten wird, um eine Vielzahl von HTTP-Sitzungen durch das zweite Computersystem zu verarbeiten, wobei die redundanten sitzungsbeständigen Zustandsdaten in dem ersten Computersystem in einer Weise gespeichert werden, die die Wiederherstellung des Sitzungszustands der Vielzahl der HTTP-Sitzungen unter Verwendung der redundanten sitzungsbeständigen Zustandsdaten unterstützt; und
Beschreiben der Arbeitslast von HTTP-Sitzungen unter Verwendung der redundanten sitzungsbeständigen Zustandsdaten, auf die von dem Schritt des Zugreifens zugegriffen wird.

11. Computerprogrammprodukt nach Anspruch 10, wobei die redundanten sitzungsbeständigen Zustandsdaten, die in dem ersten Computersystem gespeichert werden, redundante sitzungsbeständige Zustandsdaten umfassen, die in einer strukturierten Datenbank in dem ersten Computersystem gespeichert werden, wobei die strukturierte Datenbank mindestens eine Tabelle aufweist, die eine Vielzahl von Einträgen hat, wobei jeder Eintrag einer jeweiligen HTTP-Sitzung der Vielzahl der HTTP-Sitzungen entspricht.

12. Computerprogrammprodukt nach Anspruch 11, wobei der Schritt des Beschreibens der Arbeitslast von HTTP-Sitzungen unter Verwendung der redundanten Sitzungs-Zustandsdaten das Überwachen von Änderungen an der strukturierten Datenbank und das Verwenden von historischen Daten umfasst, die Änderungen an der strukturierten Datenbank betreffen, um die Arbeitslast von HTTP-Sitzungen zu beschreiben.

13. Computerprogrammprodukt nach Anspruch 11, wobei der Schritt des Beschreibens der Arbeitslast von HTTP-Sitzungen unter Verwendung der redundanten sitzungsbeständigen Zustandsdaten das Verwenden von Daten aus der strukturierten Datenbank umfasst, um mindestens einen Beschreibungsparameter von dem Satz der Beschreibungsparameter abzuleiten, der aus Folgendem besteht:
mehreren Datenbank-Aktualisierungsoperationen, die über mindestens ein Intervall gemessen werden;
einem durchschnittlichen Umfang einer Aktualisierungsoperation;
einer durchschnittlichen Größe der Einträge;
einer Gesamtgröße der strukturierten Datenbank;
einer durchschnittlichen Spaltengröße für mindestens eine Spalte der strukturierten Datenbank;
Datentypen, die von Einträgen der strukturierten Datenbank verwendet werden;
einer durchschnittlichen Sitzungsdauer;
einer durchschnittlichen Antwortzeit bei Aktualisierungen der Datenbank;
mehreren Schreiboperationen in ein Protokoll der Datenbank; und
einer durchschnittlichen Wartezeit auf die Platte in dem ersten Computersystem.

14. Vorrichtung zum Beschreiben der Arbeitslasten von HTTP-Sitzungen, die Folgendes umfasst:
ein Sitzungsredundanz-Computersystem (206), das mindestens einen Prozessor und einen Datenspeicher aufweist, um redundante sitzungsbeständige Zustandsdaten zu speichern,
die von mindestens einem Sitzungsserver-Computersystem empfangen werden, das sich außerhalb des Sitzungsredundanz-Computersystems befindet, wobei das mindestens eine Sitzungsserver-Computersystem eine Vielzahl von HTTP-Sitzungen verarbeitet und
sitzungsbeständige Zustandsdaten für die Vielzahl der HTTP-Sitzungen aufrechterhält;
wobei das Sitzungsredundanz-Computersystem dazu dient, die Wiederherstellung des Sitzungszustands der Vielzahl der HTTP-Sitzungen unter Verwendung der redundanten sitzungsbeständigen Zustandsdaten zu unterstützen, die in dem Datenspeicher gespeichert werden, und
eine Funktion (515) zur Analyse von HTTP-Sitzungen, die als eine Vielzahl von Befehlen realisiert ist, welche auf einem Computersystem ausgeführt werden können, wobei die Analyse-Funktion, wenn sie von dem Computersystem ausgeführt wird, dazu dient, die Arbeitslast der Vielzahl der HTTP-Sitzungen auf dem mindestens einen Sitzungsserver-Computersystem unter Verwendung der redundanten sitzungsbeständigen Zustandsdaten zu beschreiben, die in dem Datenspeicher des Sitzungsredundanz-Computersystems gespeichert werden.

15. Vorrichtung nach Anspruch 14, wobei sich die Funktion zur Analyse von HTTP-Sitzungen in dem Sitzungsredundanz-Computersystem befindet und auf dem mindestens einen Prozessor des Sitzungsredundanz-Computersystems ausgeführt wird.

## Revendications

1. Procédé de caractérisation d'une charge de session HTTP sur un serveur Web, comprenant les étapes exécutées par ordinateur consistant à :
traiter (603) une pluralité de sessions HTTP dans un premier système informatique, en maintenant des données d'état de persistance de session dans ledit premier système informatique pour ladite pluralité de sessions HTTP ;
transmettre (604) des données d'état de persistance de session redondantes depuis ledit premier système informatique vers un second système informatique;
stocker (607) lesdites données d'état de persistance de session redondantes dans ledit second système informatique, ledit second système informatique supportant la récupération de l'état de session de ladite pluralité de sessions HTTP en utilisant lesdites de données d'état de persistance de session redondantes stockées dans ledit second système informatique ; et
caractériser (707) ladite charge de session HTTP en utilisant lesdites données d'état de persistance de session redondantes stockées dans ledit second système informatique.

2. Procédé de caractérisation d'une charge de session HTTP selon la revendication 1, dans lequel ladite étape de stockage desdites données d'état de persistance de session redondantes dans ledit second système informatique comprend le stockage desdites données d'état de persistance de session redondantes dans une base de données structurée dans ledit second système informatique, ladite base de données structurée ayant au moins une table ayant une pluralité d'entrées, chaque entrée correspondant à une session HTTP respective de ladite pluralité de sessions HTTP.

3. Procédé de caractérisation d'une charge de session HTTP selon la revendication 2, dans lequel ladite étape de caractérisation de ladite charge de session HTTP en utilisant lesdites données d'état de persistance de session redondantes comprend l'exécution d'une ou plusieurs requêtes vis-à-vis de ladite base de données structurée afin de récupérer des données stockées dans celle-ci.

4. Procédé de caractérisation d'une charge de session HTTP selon la revendication 2, dans lequel ladite étape de caractérisation d'une charge de session HTTP en utilisant lesdites données d'état de persistance de session redondantes comprend la surveillance des modifications apportées à ladite base de données structurée, et l'utilisation de données historiques concernant les modifications apportées à ladite base de données structurée pour caractériser ladite charge de session HTTP.

5. Procédé de caractérisation d'une charge de session HTTP selon la revendication 2, dans lequel ladite étape de caractérisation d'une charge de session HTTP en utilisant lesdites données d'état de persistance de session redondantes comprend l'utilisation de données de ladite base de données structurée pour tirer des conclusions quant à des paramètres de réglage dudit premier système informatique, lesdites conclusions étant automatiquement tirées par un processus exécuté par un ordinateur.

6. Procédé de caractérisation d'une charge de session HTTP selon la revendication 2, dans lequel ladite étape de caractérisation d'une charge de session HTTP en utilisant lesdites données d'état de persistance de session redondantes comprend l'utilisation de données de ladite base de données structurée pour dériver au moins un paramètre de caractérisation de l'ensemble de paramètres de caractérisation constitué par :
un nombre d'opérations de mise à jour de base de données mesuré sur au moins un intervalle ;
une taille d'opération de mise à jour moyenne ;
une taille moyenne desdites entrées ;
une taille globale de ladite base de données structurée ;
une taille de colonne moyenne pour au moins une colonne de ladite base de données structurée ;
les types de données utilisés par les entrées de ladite base de données structurée ;
une durée de vie de session moyenne ;
un temps de réponse moyen pour les mises à jour de ladite base de données ;
un nombre d'écritures dans un journal de ladite base de données ; et
un temps d'attente moyen d'accès au disque dans ledit second système informatique.

7. Procédé de caractérisation d'une charge de session HTTP selon la revendication 1, dans lequel ledit premier système informatique comprend un serveur d'applications supportant une application serveur de session pour traiter des sessions HTTP.

8. Procédé de caractérisation d'une charge de session HTTP selon la revendication 1, dans lequel ledit second système informatique stocke des données d'état de persistance de session redondantes reçues depuis une pluralité de premiers systèmes informatiques, chaque premier système informatique traitant une pluralité respective de sessions HTTP et maintenant des données d'état de persistance de session pour la pluralité respective de sessions HTTP.

9. Procédé de caractérisation d'une charge de session HTTP selon la revendication 1, dans lequel ledit premier système informatique et ledit second système informatique sont connectés à un réseau local commun, et dans lequel ladite étape de transmission de données d'état de persistance de session redondantes depuis ledit premier système informatique vers ledit second système informatique comprend la transmission desdites données d'état de persistance de session redondantes sur ledit réseau local.

10. Produit programme informatique permettant de caractériser une charge de session HTTP d'un serveur web, le produit programme informatique comprenant :
une pluralité d'instructions exécutables par ordinateur, dans lequel lesdites instructions, lorsqu'elles sont exécutées par au moins un système informatique, amènent ledit au moins un système informatique à exécuter les étapes suivantes consistant à :
accéder à des données d'état de persistance de session redondantes stockées dans un premier système informatique, lesdites données d'état de persistance de session redondantes étant reçues dans ledit premier système informatique depuis un second système informatique, lesdites données d'état de persistance de session redondantes représentant l'état de persistance de session maintenu par ledit second système informatique pour traiter une pluralité de sessions HTTP par ledit second système informatique, lesdites données d'état de persistance de session redondantes étant stockées dans ledit premier système informatique de manière à supporter la récupération de l'état de session de ladite pluralité de sessions HTTP en utilisant lesdites données d'état de persistance de session redondantes ; et
caractériser ladite charge de session HTTP en utilisant lesdites données d'état de persistance de session redondantes auxquelles on accède par ladite étape d'accès.

11. Produit programme informatique selon la revendication 10, dans lequel lesdites données d'état de persistance de session redondantes stockées dans ledit premier système informatique comprennent des données d'état de persistance de session redondantes stockées dans une base de données structurée dans ledit premier système informatique, ladite base de données structurée ayant au moins une table ayant une pluralité d'entrées, chaque entrée correspondant à une session HTTP respective de ladite pluralité de sessions HTTP.

12. Produit programme informatique selon la revendication 11, dans lequel ladite étape de caractérisation d'une charge de session HTTP en utilisant lesdites données d'état de session redondantes comprend la surveillance des modifications apportées à ladite base de données structurée, et l'utilisation de données historiques concernant les modifications apportées à ladite base de données structurée pour caractériser ladite charge de session HTTP.

13. Produit programme informatique selon la revendication 11, dans lequel ladite étape de caractérisation d'une charge de session HTTP en utilisant lesdites données d'état de persistance de session redondantes comprend l'utilisation de données de ladite base de données structurée pour dériver au moins un paramètre de caractérisation de l'ensemble de paramètres de caractérisation constitué par :
un nombre d'opérations de mise à jour de base de données mesuré sur au moins un intervalle ;
une taille d'opération de mise à jour moyenne ;
une taille moyenne desdites entrées ;
une taille globale de ladite base de données structurée ;
une taille de colonne moyenne pour au moins une colonne de ladite base de données structurée ;
les types de données utilisés par les entrées de ladite base de données structurée ;
une durée de vie de session moyenne ;
un temps de réponse moyen pour les mises à jour de ladite base de données ;
un nombre d'écritures dans un journal de ladite base de données ; et
un temps d'attente moyen d'accès au disque dans ledit second système informatique.

14. Dispositif de caractérisation de charges de session HTTP, comprenant :
un système informatique de redondance de session (206) ayant au moins un processeur et une mémoire de données pour stocker des données d'état de persistance de session redondantes reçues depuis au moins un système informatique serveur de session extérieur audit système informatique de redondance de session, ledit au moins un système informatique serveur de session traitant une pluralité de sessions HTTP et maintenant des données d'état de persistance de session pour ladite pluralité de sessions HTTP ;
dans lequel ledit système informatique de redondance de session peut être utilisé pour supporter la récupération de l'état de session de ladite pluralité de sessions HTTP en utilisant lesdites données d'état de persistance de session redondantes stockées dans ladite mémoire de données ; et
une fonction d'analyseur de session HTTP (515) mise en oeuvre sous la forme d'une pluralité d'instructions exécutables sur un système informatique, ladite fonction d'analyseur, lorsqu'elle est exécutée par le système informatique, peut être utilisée pour caractériser la charge de ladite pluralité de sessions HTTP sur ledit au moins un système informatique serveur de session en utilisant lesdites données d'état de persistance de session redondantes stockées dans ladite mémoire de données dudit système informatique de redondance de session.

15. Dispositif selon la revendication 14, dans lequel ladite fonction d'analyseur de session HTTP réside dans ledit système informatique de redondance de session et s'exécute sur ledit au moins un processeur dudit système informatique de redondance de session.
